# EUROPEAN PATENT APPLICATION

(11) **EP 1 065 904 A1**
(43) Date of publication of application: **03.01.2001**
(21) Application number: 99401614.5
(22) Date of filing: 29.06.1999
(51) Int. Cl.: H04Q 7/38

(54) **Location registration system for a mobile communications system**

(71) Applicant: ALCATEL, 75008 Paris (FR)
(72) Inventor: Aerts, Helena Tina, 2000 Antwerp (BE); Vercauteren, Leo Albert Albertine, 2880 Bornem (BE)
(74) Representative: Plas, Axel

(57) **Abstract**

A location registration system for a mobile communications system comprises a central database (HLR), a number of local databases (MSC1/VLR1, MSC2/VLR2), and signalling links coupling the local databases (MSC1/VLR1, MSC2/VLR2) to the central database (HLR). The central database (HLR) stores information about all subscribers, whereas a local database (MSC2/VLR2) stores information about mobile stations within a certain service area (AREA2) associated with that local database (MSC2/VLR2). In case of a location update (LU) of a mobile station (MS1) entering a new service area (AREA2), a first limited subset (SET1) of information is transferred from the central database (HLR) to the local database (MSC2/VLR2) associated with that new service area (AREA2). A second subset (SET2) of information is only transferred upon a first call (CALL_OUT, CALL_IN) from or to the mobile station (MS1). In this way, the load on the signalling links is reduced.

## Description

The present invention relates to a location registration system for a mobile communications system as defined in the non-characteristic part of claim 1, a central database and a local database for use in such a location registration system as defined in the non-characteristic parts of respectively claim 9 and claim 10, and a signalling protocol for use in such a location registration system as defined in the non-characteristic part of claim 11.

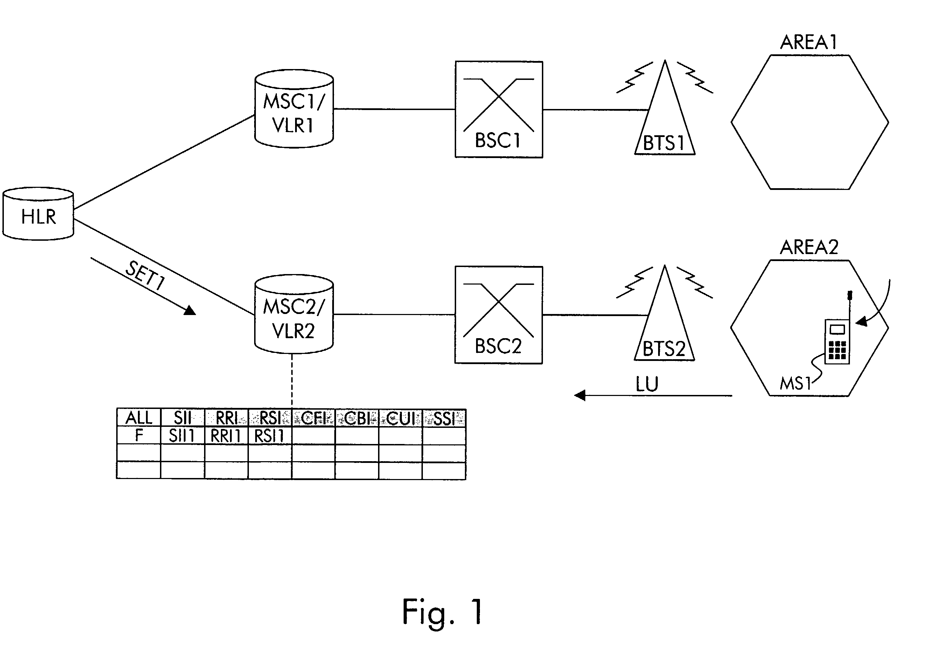

Such a location registration system for use in a mobile communications system is already known in the art, e.g. from the *'draft* on *GSM Location Management Signalling' from the author Sudeep Kumar Palat. This* draft *was published on the Internet and could be downloaded on June 18, 1999 via the URL "http://www.item.ntnu.no/∼palat/".* Therein, the location registration and signalling architecture of the GSM (Global System for Mobile communications) system is drawn in the section entitled 'The GSM Architecture', more precisely in Figure 1.1. This known location registration system contains a Home Location Register, referred to by HLR in Figure 1.1, which is a central database that maintains subscriber information on all subscribers. In addition, the GSM location registration system contains Visitor Location Registers, referred to by VLR in Figure 1.1 of the cited publication. The Visitor Location Registers are local databases each linked with a mobile switching centre and responsible to maintain subscriber information on all mobile stations located within the service area or coverage area of the mobile switching centre where they are linked to. In case of a location update, i.e. in case a mobile station moves from the coverage area of a first mobile switching centre to the coverage area of a second mobile switching centre, the Visitor Location Register linked to the mobile switching centre whose coverage area is entered will download subscriber information from the Home Location Register enabling the mobile switching centre whose coverage area is entered to handle incoming and outgoing calls to and from the mobile station. Figure 5.2 in the section entitled 'MAP Procedures' from Sudeep Kumar Palat's publication gives an overview of the signalling between the Home Location Register HLR, the Visitor Location Register VLR whose coverage area is entered and the Visitor Location Register PVLR whose coverage area is left at location update. The Visitor Location Register whose area is entered by the mobile station announces the location update to the Home Location Register HLR via a message named MAP_UPDATE_LOCATION. Thereupon, the Home Location Register downloads the subscriber information in a message named MAP_INSERT_SUBSCRIBER_DATA. The messages shown in Figure 5.2 all are transferred over the SS7 (Signalling System 7) signalling channels of the GSM system. The information that is downloaded from the Home Location Register to the Visitor Location Register in the message named MAP_INSERT_SUBSCRIBER_DATA is listed in Table 5.2 of the cited publication and contains subscriber identification information (IMSI), roaming restriction information, regional subscription information, a call forwarding information list, a call barring information list, a closed user group (CUG) information list, a supplementary services (SS) data list, and some other subscription parameters. This download of subscriber information is a very heavy process putting a considerable load on the SS7 signalling links between the Home Location Register and the Visitor Location Registers. If no call is made from the mobile station while it resides in the coverage area of the Visitor Location Register and no call is destined to the mobile station while it resides in the coverage area of the Visitor Location Register, some of the downloaded subscriber information is not used by the mobile switching centre whereto the Visitor Location Register is linked, and the large amount of subscriber parameters listed above has uselessly been transferred over the signalling links and uselessly been stored in the Visitor Location Register. In particular in mobile systems with subscribers that do not frequently make calls, such as prepaid subscribers, the known location update mechanism significantly reduces the effectiveness of the signalling between Home Location Register and Visitor Location Registers and inefficiently occupies space in the Visitor Location Register.

An object of the present invention is to provide a location registration system and signalling protocol similar to the known one, but wherein significant savings are made on the required capacity of the signalling links between the central database and the local databases, and on the required space in the local databases.

According to the invention, this object is achieved by the location registration system for a mobile communications system defined in claim 1, the central database and local database for use in such a location registration system as defined respectively in claim 9 and claim 10, and the signalling protocol for use in such a location registration system as defined in claim 11.

Indeed, instead of downloading the complete set of subscriber data at location update, only a limited first subset of subscriber information, for example comprising roaming information and regional subscription information, is downloaded. A second subset of subscriber data, for example comprising call forwarding information and supplementary services information, is downloaded when the first call (incoming or outgoing) is made and consequently will never be downloaded to the local database in case no call is made from or to the mobile station while it is located in the service area covered by that local database. Data like call forwarding information and supplementary services information, which are rather extensive, are only downloaded when they are really needed. The signalling links between the central database and the local databases as well as the storage capacity of the local databases consequently are more effectively used according to the present invention. When applied in a mobile communications system wherein a lot of subscribers do not frequently make calls, significant savings are made on the required transfer capacity of the signalling links and the required storage capacity of the local databases. However, due to the transfer of the second subset of subscriber information, the first call set-up, whether it be an originating call or a terminated call, will be slowed down according to the present invention. This is the small price paid for a significant gain in memory space required in the local databases and a significant decrease of the load on the signalling lines at each location update.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

An additional feature of the present invention is defined by claim 2.

Indeed, the call forwarding information list typically is a bulky list of call forwarding addresses and call forwarding feature parameters related to call forwarding services that forward incoming voice calls, fax messages, and so on in case the mobile station is occupied, in case the mobile station is unreachable, etc. This information is only needed by the mobile switching centre to handle incoming telephone calls and in a preferred embodiment of the present invention is transferred to the local database when the first incoming call is made and not at location update.

Another feature of the present invention is defined by claim 3.

In this way, the call barring information which is a list of feature parameters for call barring services, is transferred as part of the second subset and not automatically at each location update. This information is only needed to handle calls so that its transfer at location update is not absolutely necessary.

Also an optional feature of the present invention is defined by claim 4.

Thus, closed user group information identifying the sole group of subscribers that may be called from the mobile station or that may call the mobile station will be transferred at the first incoming or outgoing call. Also closed user group information only needs to be consulted by the mobile switching centre when a call is to be routed to the mobile station or a call is made from the mobile station, so that its transfer is best delayed until the first call.

Yet another feature of the present invention is defined by claim 5.

The supplementary services list contains information concerning services like call waiting, call hold, etc. and may never be used in case it is transferred at location update. The supplementary services information according to the present invention may also be transferred as part of the second subset.

A further feature of the location registration system according to the present invention is defined by claim 6.

Thus, the subscriber identity, roaming restriction information indicating that a subscriber is not allowed to roam in at least part of the coverage area of a certain mobile switching centre, and regional subscription parameters indicating for example that the entered mobile switching centre area is entirely restricted because of regional subscription, may be used by the local database before the first call is made and therefore are transferred as part of the first subset of subscriber information downloaded from the central database to the local database upon location update. These subscriber parameters are less extensive than for example the call forwarding list and consequently have less impact on the required transfer capacity of the signalling links and storage capacity of the local database.

Still another feature of the present invention is defined by claim 7.

In this way, the local database can quickly verify that it possesses all subscriber information or not when a call is made from a mobile station within its service area. The local database just has to check the flag and when this flag is set, has to request the central database to download the second subset of subscriber information. When an incoming call has to be routed towards a mobile station within the service area of a certain local database, the central database can ask the local database to transfer the flag. From this flag, the central database then can derive whether it first has to transfer a second subset of subscriber information to the local database before it routes the incoming call thereto or not.

The flag may in addition to the local database also be memorised by the central database so that the central database does not have to request the local database to send this flag when an incoming call has to be routed to a mobile station within the service area of that local database. The latter alternative requires some additional memory space in the central database but speeds up the handling of incoming calls and, to a minor extent, reduces the load on the signalling links when a call is coming in.

Furthermore, as is described by claim 8, the present invention is applicable in a GSM (Global System for Mobile communications) system, wherein the central database is named a Home Location Register, wherein the central databases are Visitor Location Registers linked with mobile switching centres, and wherein the signalling links are SS7 (Signalling System 7) links.

The above mentioned and other objects and features of the invention will become more apparent and the invention itself will be best understood by referring to the following description of an embodiment taken in conjunction with the accompanying drawings wherein:
Fig. 1 is a drawing of an embodiment of the location registration system according to the present invention, at a moment whereon a location update LU takes place;
Fig. 2 represents the embodiment of the location registration system according to the present invention of Fig. 1 at a moment whereon an outgoing call CALL_OUT is handled; and
Fig. 3 represents the embodiment of the location registration system according to the present invention of Fig. 1 at a moment whereon an incoming call CALL_IN is handled.

The mobile communication system drawn in Fig. 1, Fig. 2 and Fig. 3 has a GSM (Global System for Mobile communications) like architecture. First and second mobile switching centres MSC1 and MSC2 are respectively coupled to first and second base station controllers BSC1 and BSC2. To the first base station controller BSC1, a first base transceiver station BTS1 is coupled. In a similar way, a second base transceiver station BTS2 is coupled to the second base station controller BSC2. The area served by the first mobile switching centre MSC1 is named AREA1 whereas the area served by the second mobile switching centre MSC2 is named AREA2. The mobile communication system of Fig. 1, Fig. 2 and Fig. 3 further incorporates an SS7 (Signalling System 7) like signalling network to register at any time the locations of the mobile stations. This signalling network consists of a central signalling node or Home Location Register HLR and local signalling nodes or Visitor Location Registers VLR1 and VLR2. The latter Visitor Location Registers VLR1 and VLR2 are incorporated in respectively the first and second mobile switching centre MSC1 and MSC2, and are coupled to the Home Location Register HLR via signalling channels. Each signalling node, HLR, VLR1 or VLR2, has the functionality to communicate via the signalling channels and further contains a database. For the Visitor Location Register VLR2, the content of this database is drawn in the three figures Fig. 1, Fig. 2 and Fig. 3.

The mobile switching centres MSC1 and MSC2 interface between the mobile communications network and a fixed PSTN (Public Switched Telephone Network) not drawn in any of the figures. The mobile switching centres MSC1 and MSC2 must ensure that calls are routed to the mobile stations wherever they are. In order to simplify the task of the mobile switching centres MSC1 and MSC2, a specific service area, AREA1 and AREA2, is allocated to each mobile switching centre, MSC1 and MSC2. Mobile switching centre MSC1 thus has to control the switching to and from mobile stations within the first service area AREA1, whilst mobile switching centre MSC2 has to perform the same task for mobile stations within the second service area AREA2.

The base station controllers BSC1 and BSC2 each manage several base transceiver stations, but to avoid overloading the figures Fig. 1, Fig. 2 and Fig. 3, only one base transceiver station BTS1 managed by the first base station controller BSC1 and one base transceiver station BTS2 managed by the second base station controller BSC2 are drawn. The base station controller BSC1 controls the allocation and release of radio channels as well as the handovers for a number of base transceiver stations amongst whom the first base transceiver station BTS1. Base station controller BSC2 performs the same task for another set of base transceiver stations amongst whom the second base transceiver station BTS2. Each base transceiver station, BTS1 and BTS2, consists of a radio transceiver with antenna that covers a single cell. The base transceiver stations BTS1 and BTS2 handle the communications with mobile stations via a radio interface. Several base station controllers may be controlled by a single mobile switching centre, but for the sake of simplicity of the figures Fig. 1, Fig. 2 and Fig. 3, only one base station controller BSC1 controlled by the first mobile switching centre MSC1 is drawn and only one base station controller BSC2 controlled by the second mobile switching centre MSC2 is drawn. The tasks of the different components of a GSM (Global System for Mobile communications) like network are well summarised in *a publication entitled 'GSM Information' that can be found on the Internet via the URL 'http://www.mobileworld.org/gsm/info.htm'.*

The Home Location Register HLR is a central database for all subscribers that contains detailed information on the identity of each subscriber, the services to which the subscribers have access and the locations (i.e. the Visitor Location Register in whose area the subscriber is located) where the subscribers were last registered. The Visitor Location Registers VLR1 and VLR2 are each linked to a mobile switching centre MSC1 and MSC2 and temporarily store information about each mobile station within the area AREA1 or AREA 2 served by the mobile switching centre MSC1 or MSC2 where they are linked to. A mobile switching centre MSC1 or MSC2 consults its Visitor Location Register VLR1 or VLR2 each time a mobile station within its service area AREA1 or AREA2 attempts to make a call in order to verify that the request can be fulfilled. The Visitor Location Registers VLR1 and VLR2 are able to memorise for each mobile station in their area subscriber identity information SII, roaming restriction information RRI, regional subscription information RSI, call forwarding information CFI, call barring information CBI, closed user group information CUI and supplementary services information SSI.

The mobile station MS1 drawn in Fig. 1 has just entered the second service area AREA2 and sends a location update message LU to the mobile switching centre MSC2 whose service area AREA2 it has entered. The mobile switching centre thereupon downloads a first set SET1 of information concerning the mobile station MS1 from the Home Location Register HLR. This first set SET1 of information consists of subscriber identification information SII1, roaming restriction information RRI1 and regional subscription information RSI1. This first set SET1 of information is memorised by the Visitor Location Register VLR2 in a database entry foreseen for mobile station MS1. This database entry further contains a field ALL wherein the Visitor Location Register VLR2 memorises that not yet all information concerning mobile station MS1 has been downloaded from the Home Location Register HLR. In Fig. 1 this is indicated by the letter F. By downloading only a limited first set SET1 of subscriber information from the Home Location Register HLR1, the signalling links between the Home Location Register HLR and the Visitor Location Register VLR2 are not unnecessarily occupied at location update with information that will never be used if no incoming or outgoing call is destined to or initiated from the mobile station MS1 while it resides in the second service area AREA2.

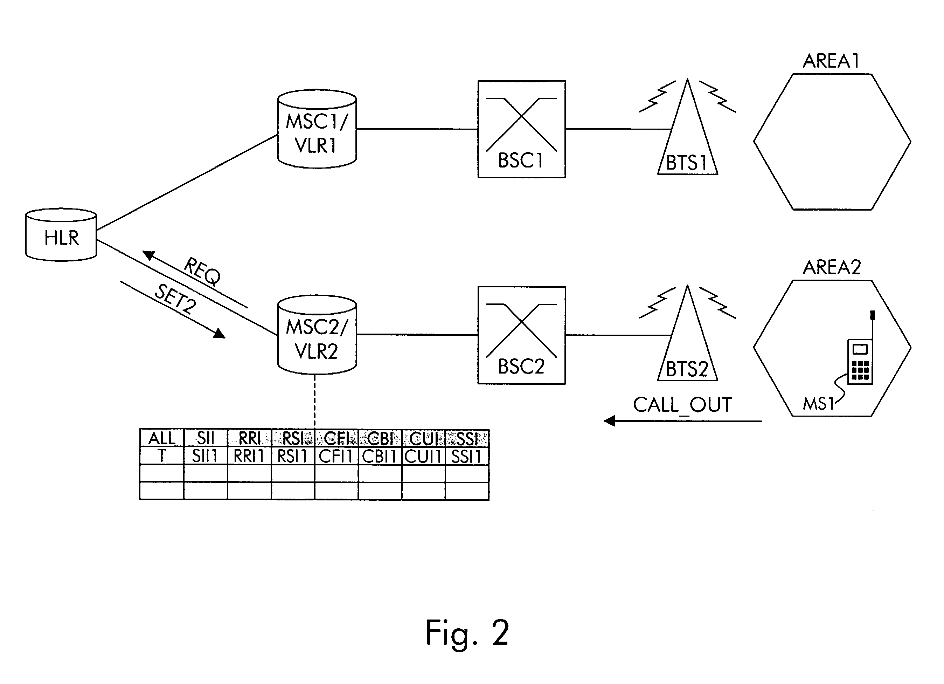

In Fig. 2, the mobile station MS1 initiates a call CALL_OUT while it is still located within the second service area AREA2. To handle this call, the second mobile switching centre MSC2 consults the Visitor Location Register VLR2 which recognises that it did not yet receive all subscriber information for mobile station MS1 by monitoring the flag F in the ALL-field. The Visitor Location Register VLR2 thereupon requests the Home Location Register HLR to download a second subset SET2 of information for mobile station MS1. This is indicated in Fig. 2 by the request message REQ that is transferred over the signalling channel between Visitor Location Register VLR2 and the Home Location Register HLR. The Home Location Register HLR responds to the request message REQ with a second subset SET2 of information comprising call forwarding information CFI1, call barring information CBI1, closed user group information CUI1 and supplementary services information SSI1. This information is memorised in the Visitor Location Register VLR2 in additional fields of the already existing database entry for mobile station MS1. The Visitor Location Register VLR2, after receipt and storage of the second subset SET2 of information will mark in the field ALL that it now contains all information concerning mobile station MS1. This is indicated by the letter T in Fig. 2. The Visitor Location Register VLR2 now possesses sufficient information to enable the mobile switching centre MSC2 handling the outgoing call CALL_OUT. As long as mobile station MS1 resides in the second service area AREA2, its outgoing calls can be handled now by the mobile switching centre MSC2 without the necessity to download additional information from the Home Location Register HLR to the Visitor Location Register VLR2. Only the first outgoing call CALL_OUT of mobile station MS1 will suffer an additional delay due to the communication between Visitor Location Register VLR2 and Home Location Register HLR required to download the second subset SET2 of information.

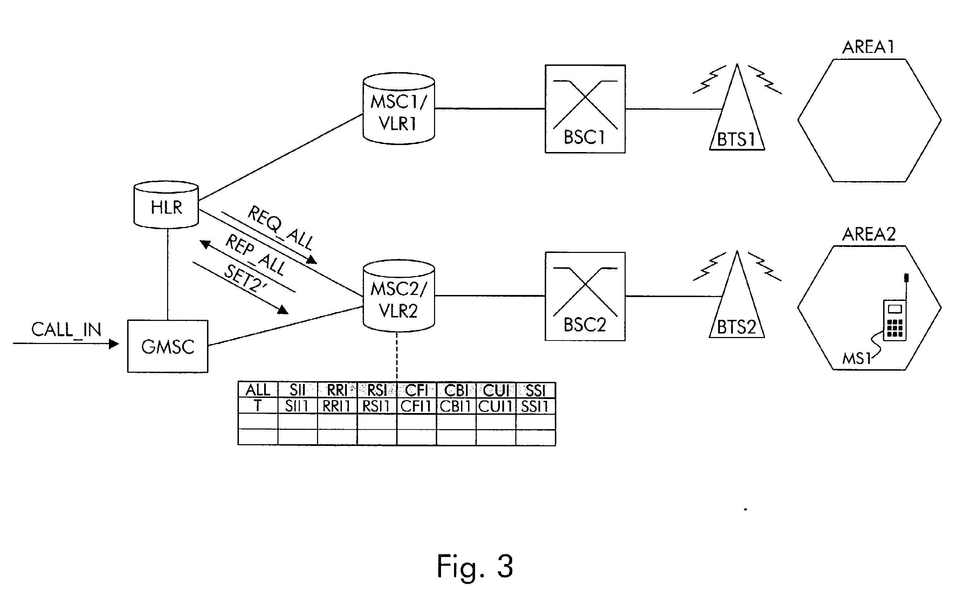

In Fig. 3, the mobile station MS1 receives a call CALL_IN while it is still residing in the second service area AREA2. It is supposed in this paragraph that this incoming call CALL_IN is the first incoming call for mobile station MS1 since it has entered the service area AREA2 and since the location update LU illustrated by Fig. 1 has taken place. It is also supposed that mobile station MS1 has not yet initiated any outgoing call. The scenario described by Fig. 2 in other words has not yet taken place at the moment the call CALL_IN comes in. In Fig. 3, the Gateway Mobile Switching Centre GMSC via which the incoming call CALL_IN is received from a public land mobile network (PLMN) is explicitly drawn. This Gateway Mobile Switching Centre GMSC via the normal HLR interrogation procedure requests the Home Location Register HLR in which area the destination mobile station MS1 is located. The Home Location Register HLR thereupon, in addition to the normal signalling between Home Location Register HLR and Visitor Location Register VLR2, requests the Visitor Location Register VLR2 whether it has sufficient information to handle the incoming call. This is done by the request message REQ_ALL transferred over the signalling channel between the Home Location Register and the second Visitor Location Register VLR2. The second Visitor Location Register VLR2, after having monitored the field ALL in its database entry related to mobile station MS1 answers in a response message REP_ALL that it has not yet received all information concerning mobile station MS1. Thereupon, the Home Location Register transfers a second subset SET2 of information comprising call forwarding information CFI1, call barring information CBI1, closed user group information CUI1 and supplementary services information SSI1. This information is memorised in the Visitor Location Register VLR2 in additional fields of the already existing database entry for mobile station MS1, in a similar way as described for Fig. 2. The Visitor Location Register VLR2, after receipt and storage of the second subset SET2 of information marks in the field ALL that it now contains all information concerning mobile station MS1. This is indicated by the letter T in Fig. 3. The Visitor Location Register VLR2 now possesses sufficient information to enable the mobile switching centre MSC2 handling the incoming call CALL_IN so that the normal call handling procedures continue. As long as mobile station MS1 resides in the second service area AREA2, its incoming and outgoing calls can be handled by the mobile switching centre MSC2 without the necessity to download additional information from the Home Location Register HLR to the Visitor Location Register VLR2. Thus, summarising Fig. 2 and Fig. 3, only the first incoming call CALL_IN or outgoing call CALL_OUT to or from mobile station MS1 will suffer an additional delay due to the communication between Visitor Location Register VLR2 and Home Location Register HLR required to download the second subset SET2 of information.

It is noticed that although application of the present invention has been described above in a GSM (Global System for Mobile communications) environment, the concept of transferring only a limited set of subscriber information from the central register to the local register at location update to avoid superfluous transfer of information over the signalling channels can be applied in any mobile communications system whose location registration system consists of a central database and local databases allocated to certain service areas. The GPRS (General Packet Radio Service) mobile data packet system and the UMTS (Universal Mobile Telecommunication System) system currently under study by standardisation bodies for example are mobile systems wherein the present invention is applicable.

Another remark is that the scope of the present invention should not be interpreted as being limited to location registration systems wherein exactly subscriber identification information, roaming restriction information and regional subscription information are transferred to the local registers at location update and wherein exactly call forwarding information, call barring information, closed user group information and supplementary services information are transferred to the local registers when the first incoming or outgoing call is initiated. It is clear that the aim of the present invention is to significantly reduce load on the signalling channels between the central and local databases at location update and this is already realised if for example information related to call forwarding, i.e. all information indicating where voice calls, fax calls, and so on have to be routed to in case the destination mobile station is e.g. switched off or unreachable, or in case of no reply, is not transferred to the local databases at location update but is transferred when the first call is coming in or going out. This call forwarding information typically is a large amount of data that should not be transferred to the local registers unless it is sure that this information will be used there.

Yet another remark is that in case no call is made from the mobile station MS1 and no call is destined to the mobile station MS1 while it resides in the service area AREA2, the second subset SET2 of subscriber information will never be downloaded to the Visitor Location Register VLR2. Since a lot of subscribers, such as prepaid subscribers, do not frequently make calls, significant savings are thus made on the signalling links between Home Location Register HLR and Visitor Location Registers VLR1 and VLR2. These savings are proportional to the amount of information that is transferred as part of the second subset SET2 instead of as part of the first subset SET1.

Furthermore it is noticed that the second subset SET2 of information may be different depending on whether the first call is an incoming call or an outgoing call for the mobile station MS1. Indeed, the subscriber information required by the mobile switching centre to route an incoming call to a mobile station in its service area differs from the information required to handle an outgoing call. This may be taken into account in an advanced signalling protocol that even more reduces the load on the signalling links.

While the principles of the invention have been described above in connection with specific apparatus, it is to be clearly understood that this description is made only by way of example and not as a limitation on the scope of the invention.

## Claims

1. Location registration system for a mobile communications system comprising a central database (HLR) for storing information for all subscribers, at least one local database (MSC2/VLR2) for storing information for mobile stations within a certain service area (AREA2), and signalling links coupling said central database (HLR) to said at least one local database (MSC2/VLR2),
CHARACTERISED IN THAT said location registration system is adapted to transfer a first subset (SET1) of information from said central database (HLR) to said local database (MSC2/VLR2) upon a location update (LU) of a mobile station (MS1) entering said service area (AREA2), and further is adapted to transfer a second subset (SET2) of information from said central database (HLR) to said local database (MSC2/VLR2) upon a first call (CALL_OUT, CALL_IN) from or to said mobile station (MS1).

2. Location registration system according to claim 1,
CHARACTERISED IN THAT said second subset (SET2) of information at least includes call forwarding information (CFI1).

3. Location registration system according to claim 2,
CHARACTERISED IN THAT said second subset (SET2) of information further includes call barring information (CBI1).

4. Location registration system according to claim 2 or 3,
CHARACTERISED IN THAT said second subset (SET2) of information further includes closed user group information (CUT1).

5. Location registration system according to claim 2 or 3 or 4,
CHARACTERISED IN THAT said second subset (SET2) of information further includes supplementary services information (SSI1).

6. Location registration system according to any of the previous claims,
CHARACTERISED IN THAT said first subset (SET1) of information at least includes subscriber identification information (SII1), roaming restriction information (RRI1) and regional subscription information (RSI1).

7. Location registration system according to any of the previous claims,
CHARACTERISED IN THAT said system is adapted to memorise at least in said local database (MSC2/VLR2) a flag (ALL) indicating that only said first subset (SET1) of information has been transferred.

8. Location registration system according to any of the previous claims,
CHARACTERISED IN THAT said mobile communications system is a Global System for Communications (GSM) like system, said central database (HLR) is a Home Location Register, said local database (MSC2/VLR2) is a Visitor Location Register, and said signalling links are Signalling System 7 (SS7) links.

9. Central database (HLR) for use in a location registration system as defined in any of claims 1 to 8.

10. Local database (MSC2/VLR2) for use in a location registration system as defined in any of claims 1 to 8.

11. Signalling protocol for use in a location registration system as defined in any of claims 1 to 7.
